# EUROPEAN PATENT SPECIFICATION

(11) **EP 2 751 405 B1**
(45) Date of publication and mention of the grant of the patent: **17.08.2016**
(21) Application number: 12826751.5
(22) Date of filing: 31.08.2012
(51) Int. Cl.: F01N 11/00, F01N 3/20, F02D 41/14, F02D 41/22

(54) **METHOD PERTAINING TO AN SCR-SYSTEM, AND AN SCR-SYSTEM**
VERFAHREN IN ZUSAMMENHANG MIT EINEM SCR-SYSTEM UND SCR-SYSTEM
PROCÉDÉ AYANT TRAIT À UN SYSTÈME DE RÉDUCTION CATALYTIQUE SÉLECTIVE ET SYSTÈME DE RÉDUCTION CATALYTIQUE SÉLECTIVE

(30) Priority: 31.08.2011 SE 1150792
(43) Date of publication of application: 09.07.2014
(73) Proprietor: Scania CV AB, 151 87 Södertälje (SE)
(72) Inventor: SIMON, Anders, S-152 51 Södertälje (SE); STENLÅÅS, Ola, S-151 48 Södertälje (SE)
(74) Representative: Scania CV AB
(86) International application number: PCT/SE2012/050927
(87) International publication number: WO 2013/032398

(56) References cited:
- US-A1- 2002 046 947
- US-A1- 2008 294 329
- US-A1- 2011 100 842
- 'UniNOx-sensor datasheet' August 2007, XP055143247 Retrieved from the Internet: <URL:http://www.kienzle.de/uploads/media/DB _UniNOxSensor.pdf> [retrieved on 2012-12-10]
- 'Emissions and fuel management - the new efficiency' VDO 2010, XP055143251 Retrieved from the Internet: <URL:http://www.vdo.com/generator/www/com/e n/vdo/main/hidden/downloads/special_oem_sol utions/sensors/flc_61200_vdo_emissions_and_ fuel_management_eng_en.pdf> [retrieved on 2012-12-10]

## Description

### TECHNICAL FIELD

The present invention relates to a method, pertaining to an SCR system in which reducing agent is supplied to an exhaust flow upstream of an SCR catalyst, for deciding whether a NOₓ sensor is situated in an engine's exhaust duct for NOₓ measurement according to an intended measuring configuration. The invention relates to an SCR system, in which reducing agent is supplied to an exhaust flow upstream of an SCR catalyst, for deciding whether a NOₓ sensor is situated in an engine's exhaust duct for NOₓ measurement according to an intended measuring configuration. The invention relates also to a computer programme product comprising programme code for a computer for implementing a method according to the invention. The invention relates also to a motor vehicle which is equipped with the SCR system.

### BACKGROUND

Vehicles today use, for example, urea as reductant in SCR (selective catalytic reduction) systems which comprise an SCR catalyst in which said reductant and NOx gas can react and be converted to nitrogen gas and water. Various types of reductants may be used in SCR systems. AdBlue is an example of a commonly used reductant.

One type of SCR system comprises a container which holds a reductant. The SCR system has also a pump adapted to drawing said reductant from the container via a suction hose and supplying it via a pressure hose to a dosing unit situated adjacent to an exhaust system of the vehicle, e.g. adjacent to an exhaust pipe of the exhaust system. The dosing unit is adapted to injecting a necessary amount of reductant into the exhaust pipe upstream of the SCR catalyst according to running routines which are stored in a control unit of the vehicle. To make it easier to regulate the pressure when there are small or no dosing amounts, the system comprises also a return hose which runs back to the container from a pressure side of the system.

Some vehicles have a first NOₓ sensor situated upstream of the SCR catalyst and adapted to measuring a prevailing NOₓ content upstream of said catalyst.

Said vehicles have also a second NOₓ sensor situated downstream of the SCR catalyst and adapted to measuring a prevailing NOₓ content downstream of said catalyst.

Said first and second NOₓ sensors are arranged to be screwed into position in the exhaust system by means of threads provided. A number of countries or regions have legal requirements that NOₓ emissions be measured and monitored so that emission levels should not exceed certain predetermined limit values. It is in particular the second NOₓ sensor which has to be in operation for said monitoring.

The second NOₓ sensor is sometimes particularly subject to manipulation in that it may be unscrewed from an intended measuring configuration. When such is the case, the second NOₓ sensor may be positioned outside the exhaust system and hence detect substantially no NOₓ emissions. In such cases the threaded hole in the exhaust system in which the second NOₓ sensor is intended to be may be plugged. An object of such fraudulent action is to be able to replace the relatively expensive reducing agent with a cheaper liquid, e.g. water. The emissions released by the vehicle when dosed with some other liquid than appropriate reducing agent will of course be too great but not be detectable because the manipulated NOₓ sensor registers small or no NOₓ contents outside the exhaust system.

US 6,810,659 describes an engine diagnosis system for use with a combustion engine which is connected to a so-called NOₓ trap with a sensor situated downstream of said trap. The sensor is adapted to providing two different output signals, the first being indicative of an air/fuel ratio and the second indicative of an NOₓ concentration. The construction of the sensor is such that correct indication of the NOₓ concentration depends on correct operation of the first output signal. It is concluded that there is degradation of the NOₓ concentration signal if the first output signal has been degraded.

US 2001/0002550 describes a method for verifying the dynamic behaviour of a measuring sensor which detects a substance concentration in the exhaust duct of a combustion engine downstream of an NOₓ converter. A signal from the measuring sensor is monitored during a regeneration phase. Incorrect dynamic behaviour is diagnosed from absence of a predetermined signal profile.

US 2011/0100842 describes a method for diagnosing a NOx readings recorder which acquires a NOx concentration in an exhaust gas tract of an internal combustion engine and comprises two measuring chambers disposed in a solid electrolyte comprising determining the oxygen content in the second measuring chamber by means of the NOx measuring electrode, additionally determining said oxygen content by means of a separate device, comparing the two values characterizing the oxygen concentration and suggesting a defective sensor if the oxygen concentration value determined in the second measuring chamber deviates from the oxygen concentration value determined by means of the separate sensor device by a predeterminable magnitude.

### SUMMARY OF THE INVENTION

There is need for a robust way of determining whether NOₓ sensors provided for measurement of NOₓ contents in exhaust systems of vehicles are really in an intended measuring configuration.

There is need to improve today's SCR systems in order to reduce or eliminate the abovementioned possibility of manipulating in particular the downstream NOₓ sensor in an exhaust system.

An object of the present invention is to propose a novel and advantageous method for improving the performance of an SCR system.

Another object of the invention is to propose a novel and advantageous SCR system and a novel and advantageous computer programme for improving the performance of an SCR system.

A further object of the invention is to propose an alternative method pertaining to an SCR system, an alternative computer programme pertaining to an SCR system, and an alternative SCR system.

A further object of the invention is to propose a method, an SCR system and a computer programme which can in a robust way decide whether a measuring position of a NOₓ sensor corresponds to an intended measuring configuration.

These objects are achieved with a method, in an SCR system in which reducing agent is supplied to an exhaust flow upstream of an SCR catalyst, for deciding whether a NOₓ sensor is situated in an engine's exhaust duct for NOₓ measurement according to an intended measuring configuration, according to claim 1.

An aspect of the invention is a proposed method, pertaining to an SCR system in which reducing agent is supplied to an exhaust flow upstream of an SCR catalyst, for deciding whether a NOₓ sensor is situated in an engine's exhaust duct for NOₓ measurement according to an intended measuring configuration. The method comprises the steps of
- using said NOₓ sensor to measure an oxygen content at the sensor's measuring position, and
- deciding on the basis of the measured oxygen content whether said measuring position corresponds to the intended measuring configuration.

An advantage of such a solution is that it may be employed irrespective of engine type. It is also independent of the degree of conversion in the SCR catalyst. It makes it possible to decide quickly whether said measuring position corresponds to the intended measuring configuration or not. This decision may with advantage be made substantially immediately after the NOₓ sensor has been unscrewed from the vehicle's exhaust pipe. Said method is applicable with advantage both on the NOₓ sensor situated upstream of the SCR catalyst and on the NOₓ sensor situated downstream of the SCR catalyst.

The invention represents a solution to problems identified of prior art requiring a signal strongly correlated with the NOₓ signal. The inventors of the present invention have for example found that solutions based on the assumption that there has to be a certain correlation between modelled NOₓ leaving the engine and measured NOₓ after the SCR catalyst present shortcomings in that said correlation may be too weak, with potential risk of incorrectly determining whether a NOₓ sensor is really in an intended measuring configuration or not.

Said intended measuring configuration may be one in which both the first and second NOₓ sensors are screwed into the exhaust system in an ordinary way. It may thus be a configuration in which the respective measurements of NOₓ content take place in the vehicle's exhaust pipe upstream and downstream of the SCR catalyst.

With advantage, the innovative method uses NOₓ sensors currently already provided, but in a novel way, viz. to detect an oxygen content and not merely an NOₓ content. An inexpensive method is thus achieved according to the invention, since no further sensors to detect oxygen content are required.

A detected variation exceeding a predetermined magnitude in measured oxygen content at start-up of said engine may be taken as a criterion that said measuring position corresponds to the intended measuring configuration. The result is a method which can quickly and accurately decide whether said measuring position corresponds to the intended measuring configuration.

A detected variation in measured oxygen content which exceeds a predetermined magnitude over a predetermined period of time may be taken as a criterion that said measuring position corresponds to the intended measuring configuration. The result is an alternative way of robustly deciding whether said measuring position corresponds to the intended measuring configuration. Said predetermined magnitude may be about 2 percent. Said predetermined period of time may be any suitable period. It may for example be 10 seconds. It may be shorter than 10 seconds. It may be longer than 10 seconds, e.g. 1 minute or 30 minutes.

The method may further comprise the steps of
- continuously determining a modelled oxygen content in the exhaust gases, and
- comparing the measured oxygen content with the modelled oxygen content and using this comparison as a basis for a criterion for deciding whether said measuring position corresponds to the intended measuring configuration.

Continuously determining a modelled oxygen content in the exhaust gases provides an expected oxygen content which can with advantage be used as reference in a comparison with the measured oxygen content. The result is an accurate method for deciding whether said measuring position corresponds to the intended measuring configuration.

Said NOₓ sensor may be situated downstream of the SCR catalyst. This is a preferred version since it is at present mostly the second NOₓ sensor which is subject to manipulation of the kind indicated above.

Said NOₓ sensor may be intended for measurements which serve as a basis for assessing the fulfilment of prescribed environmental requirements. In practice it is in fact measured data from the second NOₓ sensor which serve as a basis for assessing the fulfilment of prescribed environmental requirements. As indicated above, it is mostly the second NOₓ sensor which is subject to manipulation of the kind indicated above.

The method is easy to implement in existing motor vehicles. Software pertaining to an SCR system, in which reducing agent is supplied to an exhaust flow upstream of an SCR catalyst, for deciding whether a NOₓ sensor is situated in an engine's exhaust duct for NOₓ measurement according to an intended measuring configuration according to the invention may be installed in a control unit of the vehicle during the manufacture of the vehicle. A purchaser of the vehicle may thus have the possibility of selecting the function of the method as an option. Alternatively, software which comprises programme code for applying the innovative method to an SCR system, in which reducing agent is supplied to an exhaust flow upstream of an SCR catalyst, for deciding whether a NOₓ sensor is situated in an engine's exhaust duct for NOₓ measurement according to an intended measuring configuration may be installed in a control unit of the vehicle on the occasion of upgrading at a service station, in which case the software may be loaded into a memory in the control unit. Implementing the innovative method is therefore cost-effective, particularly as no further sensors or components need be installed in the vehicle. Relevant hardware is currently already present in the vehicle. With advantage, the solution according to the invention is effected with NOₓ sensors which in addition to being able to detect NOₓ content are also adapted to detecting oxygen content. Such NOₓ sensors are currently commercially available. The invention therefore provides a cost-effective solution to the problems indicated above.

Software which comprises programme code, pertaining to an SCR system in which reducing agent is supplied to an exhaust flow upstream of an SCR catalyst, for deciding whether a NOₓ sensor is situated in an engine's exhaust duct for NOₓ measurement according to an intended measuring configuration is easy to update or replace. Moreover, different parts of the software which comprises programme code, pertaining to an SCR system in which reducing agent is supplied to an exhaust flow upstream of an SCR catalyst, for deciding whether a NOₓ sensor is situated in an engine's exhaust duct for NOₓ measurement according to an intended measuring configuration may be replaced independently of one another. This modular configuration is advantageous from a maintenance perspective.

The NOₓ sensors currently on the market are adapted to measuring both NOₓ content and oxygen content. The amount of oxygen in exhaust gases from a combustion engine is substantially unchanged downstream of the SCR catalyst relative to upstream of it. The oxygen signal of the NOₓ sensor after the catalyst therefore has a strong correlation with modelled amounts of oxygen from said engine. If an NOₓ sensor is fitted outside the exhaust pipe, its oxygen signal will constantly show about 21%.

The invention is based not on NOₓ content but on oxygen content detected by NOₓ sensors. It may be noted that in cases where modelled oxygen content takes a large step, e.g. 10 percent, measured oxygen content should change correlatively. This makes it possible according to the invention to decide that said measuring position corresponds to the intended measuring configuration.

In cases where modelled oxygen content takes a large step, e.g. 10 percent, without measured oxygen content changing similarly, i.e. where measured oxygen content is substantially unchanged, it may according to the invention be decided that said measuring position does not correspond to the intended measuring configuration.

An aspect of the invention is a proposed SCR system in which reducing agent is supplied to an exhaust flow upstream of an SCR catalyst which comprises means for deciding whether a NOₓ sensor is situated in an engine's exhaust duct for NOₓ measurement according to an intended measuring configuration. The SCR system comprises means for using said NOₓ sensor to measure an oxygen content at the sensor's measuring position, and means for using the measured oxygen content as a basis for deciding whether said measuring position corresponds to the intended measuring configuration.

The SCR system may further comprise means for taking a detected variation which exceeds a predetermined magnitude in measured oxygen content at start-up of said engine as a criterion that said measuring position corresponds to the intended measuring configuration.

The SCR system may further comprise means for taking a detected variation in measured oxygen content which exceeds a predetermined magnitude over a predetermined period of time as a criterion that said measuring position corresponds to the intended measuring configuration.

The SCR system may further comprise
- means for continuously determining a modelled oxygen content in the exhaust gases, and
- means for comparing the measured oxygen content with the modelled oxygen content and using this comparison as a basis for a criterion for deciding whether said measuring position corresponds to the intended measuring configuration.

Said NOₓ sensor may be situated downstream of the SCR catalyst.

Said NOₓ sensor may be intended for measurements which serve as a basis for assessing the fulfilment of prescribed environmental requirements.

The above objects are also achieved with a motor vehicle which is provided with the SCR system. The vehicle may be a truck, bus or car.

An aspect of the invention is a proposed computer programme, pertaining to an SCR system in which reducing agent is supplied to an exhaust flow upstream of an SCR catalyst, for deciding whether a NOₓ sensor is situated in an engine's exhaust duct for NOₓ measurement according to an intended measuring configuration, which programme comprises programme code stored on a computer-readable medium for causing an electronic control unit or another computer connected to the electronic control unit to perform steps according to any one of claims 1-7.

An aspect of the invention is a proposed computer programme, pertaining to an SCR system in which reducing agent is supplied to an exhaust flow upstream of an SCR catalyst, for deciding whether a NOₓ sensor is situated in an engine's exhaust duct for NOₓ measurement according to an intended measuring configuration, which programme comprises programme code for causing an electronic control unit or another computer connected to the electronic control unit to perform steps according to any one of claims 1-7.

An aspect of the invention is a proposed computer programme product comprising a programme code stored on a computer-readable medium for performing method steps according to any one of claims 1-7 when said computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations in other fields, which are within the scope of the invention.

### BRIEF DESCRIPTION OF THE DRAWINGS

For fuller understanding of the present invention and its further objects and advantages, the detailed description set out below should be read in conjunction with the accompanying drawings, in which the same reference notations pertain to similar items in the various diagrams and
Figure 1 schematically illustrates a vehicle according to an embodiment of the invention,
Figure 2a schematically illustrates a subsystem for the vehicle depicted in Figure 1, according to an embodiment of the invention,
Figure 2b schematically illustrates a subsystem for the vehicle depicted in Figure 1, according to an embodiment of the invention,
Figure 3 schematically presents two graphs according to an aspect of the present invention,
Figure 4a is a schematic flowchart of a method according to an embodiment of the invention,
Figure 4b is a more detailed schematic flowchart of a method according to an embodiment of the invention, and
Figure 5 schematically illustrates a computer according to an embodiment of the invention.

### DETAILED DESCRIPTION OF THE DRAWINGS

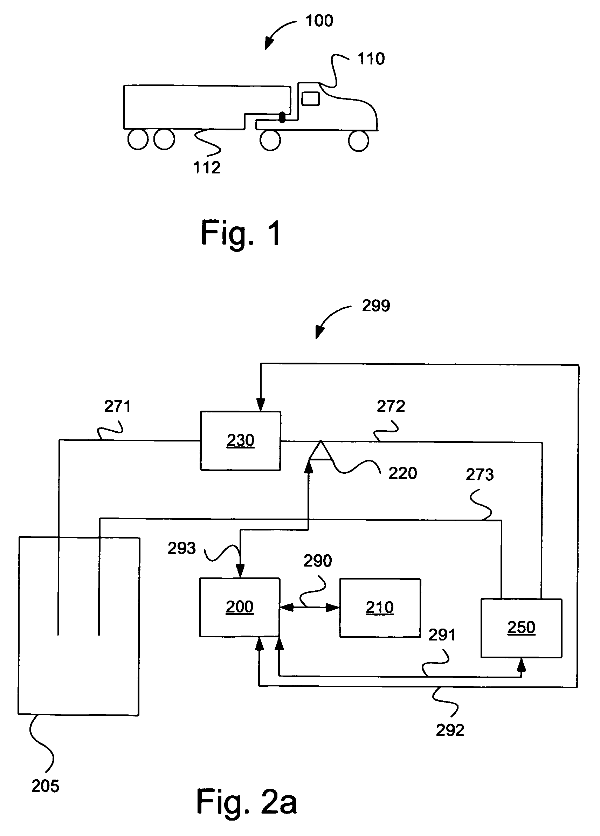

Figure 1 depicts a side view of a vehicle 100. The vehicle here exemplified comprises a tractor unit 110 and a semitrailer 112. It may be a heavy vehicle, e.g. a truck or a bus. It may alternatively be a car.

It should be noted that the invention is suitable for application in any SCR system and is therefore not restricted to SCR systems of motor vehicles. The innovative method and the innovative SCR system are well suited to other platfforms which comprise an SCR system than motor vehicles, e.g. watercraft. The watercraft may be of any kind, e.g. motorboats, steamers, ferries or ships.

The innovative method and the innovative SCR system according to an aspect of the invention are also well suited for example to systems which comprise industrial engines and/or engine-powered industrial robots.

The innovative method and the innovative SCR system according to an aspect of the invention are also well suited to various kinds of power plants, e.g. an electric power plant provided with a diesel generator.

The innovative method and the innovative SCR system are well suited to any engine system which comprises an engine and an SCR system, e.g. on a locomotive or some other platform.

The innovative method and the innovative SCR system are well suited to any system which comprises an NOₓ generator and an SCR system.

The reducing agent may be any suitable reducing agent, e.g. AdBlue etc. It may be a urea-based reducing agent.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reductant in liquid form. The line may be a pipe of any size. The line may be made of any suitable material, e.g. plastic, rubber or metal.

The term "reducing agent" refers herein to an agent used for reacting with certain emissions in an SCR system. These emissions may for example be NOx gas. Another term for reducing agent is "reductant". The terms "reductant" and "reducing agent" are herein used synonymously. Said reductant in one version is so-called AdBlue. Other kinds of reductant may of course be used. AdBlue is herein cited as an example of a reductant, but one skilled in the art will appreciate that the innovative method and the innovative device are feasible with other types of reductants, subject to adjustments as necessary.

Figure 2a depicts a subsystem 299 of the vehicle 100. This subsystem is situated in the tractor unit 110 and may be part of an SCR system. It comprises in this example a container 205 arranged to hold a reducing agent. The container is adapted to containing a suitable amount of reducing agent and also to being replenishable as necessary. It might for example accommodate 75 or 50 litres of reducing agent.

A first line 271 may be provided to lead said reducing agent to a pump 230 from the container 205. The pump may be any suitable pump. It may be a diaphragm pump provided with at least one filter. It is adapted to being driven by an electric motor. It is adapted to drawing the reducing agent from the container 205 via the first line 271 and supplying it via a second line 272 to a dosing unit 250. The dosing unit comprises an electrically controlled dosing valve by means of which a flow of reducing agent added to the exhaust system can be controlled. The pump 230 is adapted to pressurising the reducing agent in the second line 272. The dosing unit 250 is provided with a throttle unit against which said pressure of the reducing agent builds up in the subsystem 299.

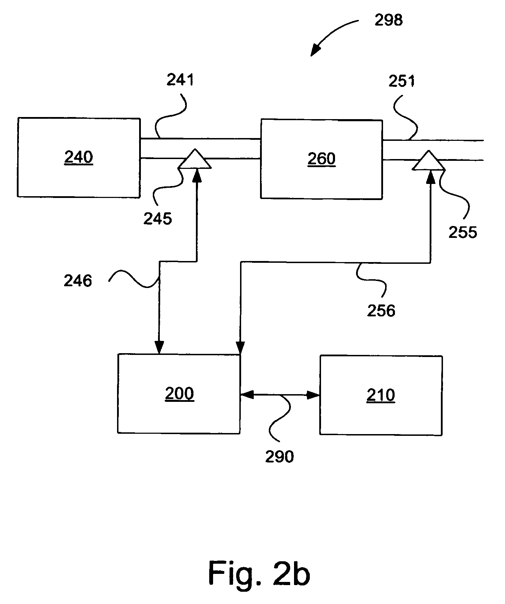

The dosing unit 250 is adapted to supplying said reducing agent to an exhaust system (depicted in Figure 2b) of the vehicle 100. More specifically, the dosing unit is adapted to supplying a suitable amount of reducing agent in a controlled way to an exhaust system of the vehicle. In this version, an SCR catalyst (depicted in Figure 2b) is situated downstream of a location in the exhaust system where the supply of reducing agent takes place.

A third line 273 runs between the dosing unit 250 and the container 205 and is adapted to leading back to the container a certain amount of the reducing agent fed to the dosing valve 250. This configuration results in advantageous cooling of the dosing unit.

A first control unit 200 is arranged for communication with a pressure sensor 220 via a link 293. The pressure sensor is adapted to detecting a prevailing pressure of the reducing agent at the location where it is fitted. In this version the pressure sensor is situated adjacent to the second line 272 in order to measure a working pressure of the reducing agent downstream of the pump 230. The pressure sensor is adapted to continuously sending signals to the first control unit which contain information about a prevailing pressure of the reducing agent.

The first control unit 200 is arranged for communication with the pump 230 via a link 292. The first control unit is adapted to controlling the operation of the pump in order, for example, to regulate the flow of reducing agent within the subsystem 299. It is adapted to controlling an operating power of the pump by regulating the associated electric motor.

The first control unit 200 is arranged for communication with the dosing unit 250 via a link 291. The first control unit is adapted to controlling the operation of the dosing unit in order, for example, to regulate the supply of reducing agent to the vehicle's exhaust system. The first control unit is adapted to controlling the operation of the dosing unit in order, for example, to regulate the return supply of reducing agent to the container 205.

The first control unit 200 is adapted to using a stored model to continuously calculate the oxygen content of the vehicle's exhaust gases. This calculation may be based on vehicle parameters, e.g. charge pressure and amount of fuel injected in the engine's cylinders. Said vehicle parameters may be continuously conveyed to the first control unit 200 in a conventional way.

A second control unit 210 is arranged for communication with the first control unit 200 via a link 290. This second control unit may be detachably connected to the first control unit. It may be a control unit external to the vehicle. It may be adapted to effecting the innovative method steps according to the invention. It may be used to cross-load software to the first control unit, particularly software for applying the innovative method. The second control unit may alternatively be arranged for communication with the first control unit via an internal network in the vehicle.

Figure 2b depicts a subsystem 298 of the vehicle 100. This subsystem is situated in the tractor unit 110 and may form part of an SCR system. It comprises in this example a combustion engine 240 and a first exhaust passage 241 adapted to leading an exhaust flow generated by the engine to an SCR catalyst 260. The catalyst is incorporated in a silencer of the vehicle 100 in a conventional way. A second exhaust passage 251 is also provided to lead the exhaust flow to the vehicle's surroundings from said catalyst.

A first NOₓ sensor 245 is provided adjacent to the first exhaust passage 241 and is adapted to measuring a prevailing NOₓ content in the first exhaust passage. It is adapted to measuring a prevailing NOₓ content in the first exhaust passage upstream of the SCR catalyst 260. This first NOₓ sensor is arranged for communication with the first control unit 200 via a link 246. It is adapted to continuously sending signals to the first control unit which contain information about a prevailing NOₓ content of the exhaust flow. The first control unit is adapted to receiving said signals containing a prevailing NOₓ content of the exhaust flow upstream of the catalyst.

The first NOₓ sensor 245 is adapted to measuring a prevailing oxygen content in the first exhaust passage 241. It is adapted to measuring a prevailing oxygen content in the first exhaust passage upstream of the SCR catalyst 260. It is adapted to continuously sending signals to the first control unit 200 which contain information about a prevailing oxygen content of the exhaust flow. The first control unit is adapted to receiving said signals containing a prevailing oxygen content of the exhaust flow upstream of the catalyst.

A second NOₓ sensor 255 is provided adjacent to the second exhaust passage 251 and is adapted to measuring a prevailing NOₓ content in the second exhaust passage. It is adapted to measuring a prevailing NOₓ content in the second exhaust passage downstream of the SCR catalyst 260. This second sensor is arranged for communication with the first control unit 200 via a link 256. It is adapted to continuously sending signals to the first control unit which contain information about a prevailing NOₓ content of the exhaust flow. The first control unit is adapted to receiving said signals containing a prevailing NOₓ content of the exhaust flow downstream of the catalyst.

The second NOₓ sensor 255 is adapted to measuring a prevailing oxygen content in the second exhaust passage 251. It is adapted to measuring a prevailing NOₓ content in the second exhaust passage downstream of the SCR catalyst 260. It is arranged for communication with the first control unit 200 via a link 256. It is adapted to continuously sending signals to the first control unit which contain information about a prevailing oxygen content of the exhaust flow. The first control unit is adapted to receiving said signals containing a prevailing oxygen content of the exhaust flow downstream of the catalyst.

In one version the first control unit 200 is adapted to using the signals received which contain a prevailing oxygen content of the exhaust flow downstream and upstream of the SCR catalyst 260 as a basis for deciding whether the respective measuring positions for the first and second NOₓ sensors correspond to an intended measuring configuration, in accordance with an aspect of the innovative method. In particular, in one version, the first control unit is adapted to using the signals received which contain a prevailing oxygen content of the exhaust flow downstream of the catalyst as a basis for deciding whether said measuring position for the second NOₓ sensor corresponds to the intended measuring configuration, in accordance with an aspect of the innovative method.

The second control unit 210 may be adapted to performing substantially similar functions to the first control unit 200, e.g. using the signals received which contain information about a prevailing oxygen content of the exhaust flow downstream and upstream of the SCR catalyst 260 as a basis for deciding whether the respective measuring positions for the first and second NOₓ sensors correspond to an intended measuring configuration. The innovative method may be applied by the first control unit 200 or the second control unit 210 or by both of them.

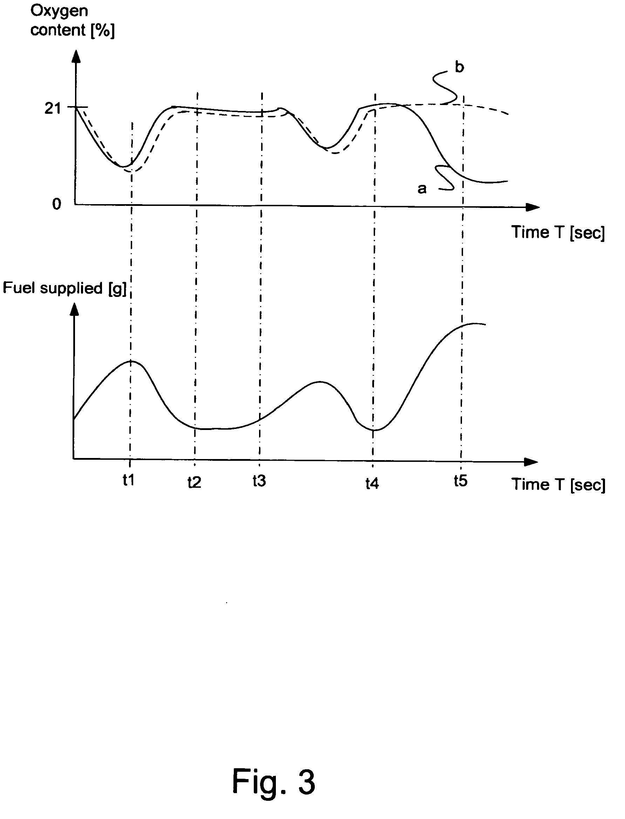

Figure 3 presents schematic graphs in which different operating parameters of the vehicle 100 are plotted against time in an embodiment example which illustrates an aspect of the present invention. This example, in which a decision is required as to whether a measuring position for the second NOₓ sensor 255 corresponds to an intended measuring configuration, uses measured data from this second sensor, which is intended to measure NOₓ /oxygen content downstream of the SCR catalyst 260. In an alternative version where the decision required is whether a measuring position for the first NOₓ sensor 245 corresponds to an intended measuring configuration, measured data from this first sensor, which is intended to measure NOₓ /oxygen content upstream of the catalyst, are used in a similar way. In a further version where the decision required is whether the respective measuring positions for the first NOₓ sensor 245 and the second NOₓ sensor 255 correspond to an intended measuring configuration, measured data from the first and second sensors may be used in a similar way.

The upper graph in Figure 3 plots modelled oxygen content Oxmod (continuous line a) against time T. It also plots measured oxygen content Oxmeas (broken line *b*) against time *T.* The lower graph shows how the amount of fuel supplied to the engine 240 varies over time T. An operating situation of the vehicle will now illustrate the example.

At time t1 representing a start-up of the vehicle, both modelled oxygen content Oxmod and measured oxygen content Oxmeas drop temporarily. The two curves a and b follow one another quite well, albeit with a certain natural displacement due to the response time of the NOₓ sensors. Thus it may be concluded that a measuring position for the second NOₓ sensor which provides data for line b corresponds to the intended measuring configuration. In a case where curve b at a start-up of the vehicle, e.g. at time t1, shows a detected variation which is below a predetermined magnitude in measured oxygen content, this is taken as a criterion that said measuring position does not correspond to the intended measuring configuration.

In one embodiment a detected variation in measured oxygen content which exceeds a predetermined magnitude over a predetermined period of time may be taken as a criterion that said measuring position corresponds to the intended measuring configuration. Such a period is exemplified as that between a second time t2 and a third time t3. In this example a detected variation in measured oxygen content is below a predetermined magnitude over the predetermined period, so this cannot be taken as a criterion that said measuring position corresponds to the intended measuring configuration. Nor is it possible, however, to conclude that said measuring position does not correspond to the intended measuring configuration.

In this example the second NOₓ sensor 255 is situated at an intended location for its intended measurement of NOₓ /oxygen content. At a fourth time t4 said second sensor is unscrewed from its intended position, with the result that it measures NOₓ /oxygen content in surrounding air instead of at its intended position.

At a fifth time t5 the measured oxygen content Oxmeas is compared with the modelled oxygen content Oxmod. In this example it is possible to conclude that a measuring position of the second NOₓ sensor does not correspond to the intended measuring position.

There are various ways in which said comparison between the measured oxygen content Oxmeas and the modelled oxygen content Oxmod may be conducted.

In one example, observed maximum and minimum oxygen contents (Oxmeas_max and Oxmeas_min) communicated from NOₓ sensors and observed maximum and minimum oxygen contents from oxygen models (Oxmod_max and Oxmod_min) may, after vehicle start-up, be continuously saved in a memory of the first control unit 200. Subtracting the observed minimum values from the observed maximum values provides a measure of how much said sensors have varied and a measure of how much the model values have varied (Oxmeas_diff = Oxmeas_max - Oxmeas_min and Oxmod_diff = Oxmod_max - Oxmod_min).

If Oxmeas_diff is greater than a predetermined value corresponding for example to 2 percent in oxygen variation, it may be concluded that a measuring position of the second NOₓ sensor corresponds to the intended measuring position. When such is the case, all of the maximum and minimum values are zeroed and estimating how much the model and sensors have varied begins again.

If Oxmod_diff becomes greater than a predetermined value, e.g. 10 percent, without Oxmeas_diff being greater than, for example, 2 percent, it may be concluded that a measuring position of the second NOₓ sensor does not correspond to the intended measuring position.

In one embodiment, modelled oxygen signals may be low-pass filtered to the extent that the signal assumes a slower dynamic than the NOₓ sensor's oxygen signal. This is done to avoid erroneous conclusions due to slow dynamics of the measured oxygen signal.

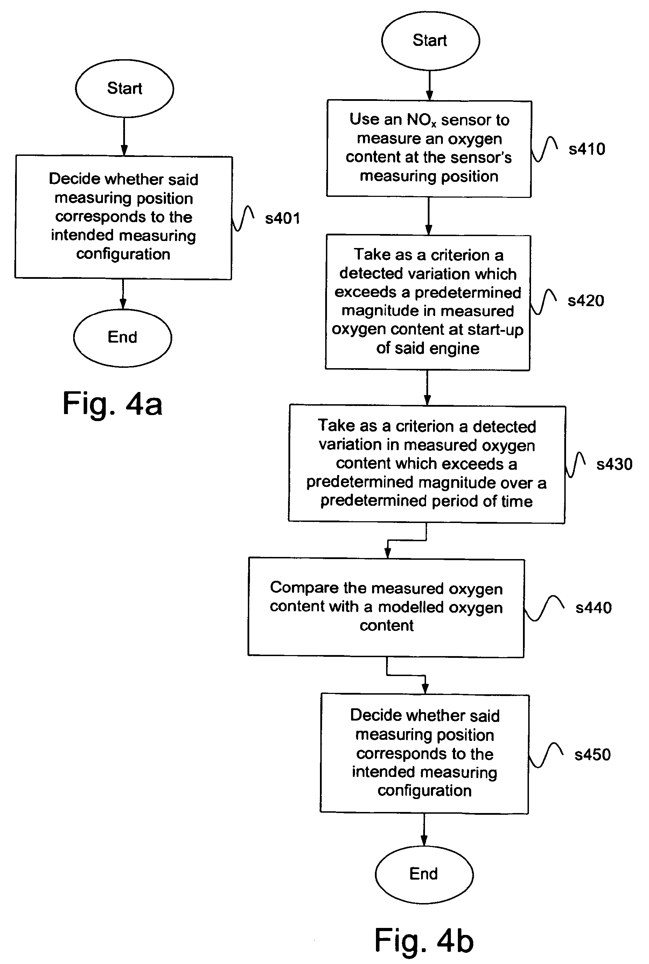

Figure 4a is a schematic flowchart of a method, in an SCR system in which reducing agent is supplied to an exhaust flow upstream of an SCR catalyst, for deciding whether an NOₓ sensor is situated in an engine's exhaust duct for NOₓ measurement according to an intended measuring configuration, in one embodiment of the invention. The method comprises a first step s401 comprising the steps of using said NOₓ sensor to measure an oxygen content at its measuring position, and deciding on the basis of the measured oxygen content whether said measuring position corresponds to the intended measuring configuration. The method ends after step s401.

Figure 4b is a schematic flowchart of a method, in an SCR system in which reducing agent is supplied to an exhaust flow upstream of an SCR catalyst, for deciding whether an NOₓ sensor is situated in an engine's exhaust duct for NOₓ measurement according to an intended measuring configuration, in one embodiment of the invention.

The method comprises a first step s410 comprising the step of using said NOₓ sensor to measure an oxygen content at its measuring position. Said sensor may be the first NOₓ sensor 245 or the second NOₓ sensor 255. In one version the innovative method may be applied on both sensors at the same time, with adjustments as necessary. It is given in this context that said sensors have functionality not only to measure NOₓ content in a conventional way but also, according to the invention, to measure a prevailing oxygen content Oxmeas. Step s410 is followed by a step s420.

Method step s420 comprises the step of taking a detected variation which exceeds a predetermined magnitude in measured oxygen content at start-up of the vehicle's engine 240 as a criterion that said measuring position corresponds to the intended measuring configuration. At start-up of said engine, more oxygen is temporarily consumed in combustion, which means that less oxygen passes through the vehicle's exhaust system. This fact may be used to determine whether the NOₓ sensor responds correctly to this phenomenon by detecting a temporarily lower oxygen content Oxmeas. Step s420 is followed by a step s430.

Method step s430 comprises the step of taking a detected variation in measured oxygen content which exceeds a predetermined magnitude over a predetermined period of time as a criterion that said said measuring position corresponds to the intended measuring configuration. If the NOₓ sensor does not show a substantially constant oxygen content, e.g. 21%, or if an absolute value of the oxygen content changes more than a predetermined value over said period, this may be taken to indicate that the sensor really is fitted at its intended measuring position. Step s430 is followed by a step s440.

Method step s440 comprises the steps of continuously determining a modelled oxygen content Oxmod of the exhaust gases, comparing the measured oxygen content with the modelled oxygen content and using this comparison as a basis for a criterion for deciding whether said measuring position corresponds to the intended measuring configuration. Said comparison may be conducted in various suitable ways. Step s440 is followed by a step s450.

Method step s450 comprises the step of using the measured oxygen content Oxmeas as a basis for deciding whether said measuring position corresponds to the intended measuring configuration. This may be conducted on the basis of step s420 or on the basis of step s430 or on the basis of step s440. It should here be noted that according to the invention it is possible at step s450 to decide whether said measuring position corresponds to the intended measuring configuration by using one or more of steps s420, s430 and s440. The method ends after step s450.

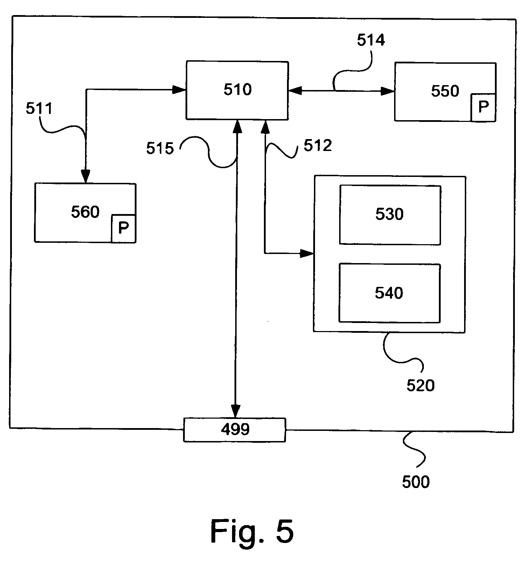

Figure 5 is a diagram of a version of a device 500. The control units 200 and 210 described with reference to Figure 2a and Figure 2b may in one version comprise the device 500, which itself comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

The device 500 is adapted to using a stored model to continuously calculate oxygen contents of the vehicle's exhaust gases. This calculation may be based on vehicle parameters, e.g. charge pressure and amounts of fuel injected in the engine's cylinders.

A proposed computer programme P comprises routines for using said NOₓ sensor to measure an oxygen content at the sensor's measuring position, and for using the measured oxygen content as a basis for deciding whether said measuring position corresponds to the intended measuring configuration, according to the innovative method.

The programme P comprises routines for taking a detected variation which exceeds a predetermined magnitude in measured oxygen content at start-up of said engine as a criterion that said measuring position corresponds to the intended measuring configuration.

The programme P comprises routines for taking a detected variation in measured oxygen content which exceeds a predetermined magnitude over a predetermined period of time as a criterion that said measuring position corresponds to the intended measuring configuration.

The programme P comprises routines for continuously determining a modelled oxygen content of the exhaust gases, comparing the measured oxygen content with the modelled oxygen content and using this comparison as a basis for a criterion for deciding whether said measuring position corresponds to the intended measuring configuration.

The programme P may be stored in an executable form or in compressed form in a memory 560 and/or in a read/write memory 550.

Where it is stated that the data processing unit 510 performs a certain function, it means that it effects a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is arranged to communicate with the data processing unit via a data bus 514. The links 246, 256, 290, 291, 292 and 293, for example, may be connected to the data port 599 (see Figure 2a and Figure 2b).

When data are received on the data port 599, they are stored temporarily in the second memory element 540. When input data received have been temporarily stored, the data processing unit 510 will be ready to conduct code execution as described above. In one version, signals received on the data port 599 contain information about measured oxygen content upstream of the SCR catalyst 260, which may be measured continuously by an NOₓ sensor 245. In one version, signals received on the data port contain information about measured oxygen content downstream of the SCR catalyst, which may be measured continuously by an NOₓ sensor 255. In one version, signals received on the data port contain information about prevailing pressure of the reducing agent in the line 272, which may be measured continuously by a pressure sensor 220. The signals received on the data port may be used by the device 500 to decide whether a measuring position of the second NOₓ sensor 255 corresponds to an intended measuring configuration, in one aspect of the invention.

Parts of the methods herein described may be conducted by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments have been chosen and described in order best to explain the principles of the invention and their practical applications and thereby make it possible for one skilled in the art to understand the invention for different embodiments and with the various modifications appropriate to the intended use.

## Claims

1. A method, in an SCR system in which reducing agent is supplied to an exhaust flow upstream of an SCR catalyst (260), for deciding whether a NOₓ sensor (245; 255) is situated in the exhaust duct (241; 251) of an engine (240) for NOₓ measurement according to an intended measuring configuration,
**characterised by** the steps of
- using (s410) said NOₓ sensor (245; 255) to measure an oxygen content (Oxmeas) at the NOₓ sensor's measuring position, and
- deciding on the basis of the measured oxygen content (Oxmeas) whether said measuring position corresponds to the intended measuring configuration.

2. A method according to claim 1, in which a detected variation which exceeds a predetermined magnitude in measured oxygen content at start-up of said engine (240) is taken as a criterion that said measuring position corresponds to the intended measuring configuration.

3. A method according to claim 1, in which a detected variation in measured oxygen content (Oxmeas) which exceeds a predetermined magnitude over a predetermined period of time (t2-t3) is taken as a criterion that said measuring position corresponds to the intended measuring configuration.

4. A method according to claim 3, in which said predetermined magnitude is 2 percent.

5. A method according to claim 1, comprising the steps of
- continuously determining a modelled oxygen content of the exhaust gases, and
- comparing (s440) the measured oxygen content (Oxmeas) with the modelled oxygen content (Oxmod) and using this comparison as a basis for a criterion for deciding whether said measuring position corresponds to the intended measuring configuration.

6. A method according to any one of the foregoing claims, in which said NOₓ sensor (255) is situated downstream of the SCR catalyst (260).

7. A method according to any one of the foregoing claims, in which said NOₓ sensor (245; 255) is intended for measurements which serve as a basis for assessing the fulfilment of prescribed environmental requirements.

8. An SCR system in which reducing agent is supplied to an exhaust flow upstream of an SCR catalyst (260), comprising means (200; 210; 500) for deciding whether a NOₓ sensor (245; 255) is situated in the exhaust duct (241; 251) of an engine (240) for NOₓ measurement according to an intended measuring configuration,
**characterised by**
- means (200; 210; 500) for using said NOₓ sensor (245; 255) to measure an oxygen content (Oxmeas) at the NOₓ sensor's measuring position, and
- means (200; 210; 500) for deciding on the basis of the measured oxygen content (Oxmeas) whether said measuring position corresponds to the intended measuring configuration.

9. An SCR system according to claim 8, further comprising means (200; 210; 500) for taking a detected variation which exceeds a predetermined magnitude in measured oxygen content at start-up of said engine (240) as a criterion that said measuring position corresponds to the intended measuring configuration.

10. An SCR system according to claim 8, further comprising means (200; 210; 500) for taking a detected variation in measured oxygen content (Oxmeas) which exceeds a predetermined magnitude over a predetermined period of time (t2-t3) as a criterion that said measuring position corresponds to the intended measuring configuration.

11. An SCR system according to claim 10, in which said predetermined magnitude is 2 percent.

12. An SCR system according to claim 8, comprising
- means (200; 210; 500) for continuously determining a modelled oxygen content of the exhaust gases, and
- means (200; 210; 500) for comparing the measured oxygen content (Oxmeas) with the modelled oxygen content (Oxmod) and using this comparison as a basis for a criterion for deciding whether said measuring position corresponds to the intended measuring configuration.

13. An SCR system according to any one of claims 8-12, in which said NOₓ sensor (255) is situated downstream of the SCR catalyst (260).

14. An SCR system according to any one of claims 8-13, in which said NOₓ sensor (245; 255) is intended for measurements which serve as a basis for assessing the fulfilment of prescribed environmental requirements.

15. A motor vehicle (100; 110) provided with an SCR system according to any one of claims 8-14.

16. A motor vehicle (100; 110) according to claim 15, which vehicle is any from among truck, bus or car.

17. A computer programme (P), in an SCR system in which reducing agent is supplied to an exhaust flow upstream of an SCR catalyst (260), for deciding whether a NOₓ sensor (245; 255) is situated in the exhaust duct (241; 251) of an engine (240) for NOₓ measurement according to an intended measuring configuration, which computer programme comprises programme code adapted to cause an electronic control unit (200; 500) or another computer (210; 500) connected to the electronic control unit (200; 500) to perform steps according to any one of claims 1-7.

18. A computer programme product comprising a programme code stored on a computer-readable medium adapted to perform method steps according to any one of claims 1-7 when said programme is run on an electronic control unit (200; 500) or another computer (210; 500) connected to the electronic control unit (200; 500). adapted to perform

## Patentansprüche

1. Verfahren, in einem SCR System, wobei ein Reduktionsmittel einem Abgasfluss stromaufwärts eines SCR- Katalysators (260) zugeführt wird, zum Entscheiden, ob sich ein NOₓ Sensor (245; 255) in dem Abgaskanal (241; 251) eines Motors (240) zur NOₓ Messung entsprechend einer geplanten Messkonfiguration befindet, **gekennzeichnet durch** die Schritte
- Verwenden (s410) des NOₓ Sensors (245; 255) zum Messen eines Sauerstoffgehalts (Oxmeas) an der NOₓ Sensormessposition, und
- Entscheiden, basierend auf dem gemessenen Sauerstoffgehalt (Oxmeas), ob die Messposition der geplanten Messkonfiguration entspricht.

2. Verfahren nach Anspruch 1, wobei eine detektierte Veränderung, welche eine vorbestimmte Größe an gemessenem Sauerstoffgehalt beim Start des Motors (240) überschreitet, als ein Kriterium verwendet wird, dass die Messposition der geplanten Messkonfigurationen entspricht;

3. Verfahren nach Anspruch 1, wobei eine detektierte Veränderung an gemessenem Sauerstoffgehalt (Oxmeas), welche eine vorbestimmte Größe über ein vorbestimmtes Zeitintervall (t2-t3) überschreitet, als Kriterium dafür verwendet wird, dass die Messposition der geplanten Messkonfigurationen entspricht.

4. Verfahren nach Anspruch 3, wobei die vorbestimmte Größe 2 Prozent ist.

5. Verfahren nach Anspruch 1, umfassend die Schritte
- kontinuierliches Bestimmen eines modellierten Sauerstoffgehalts des Abgases, und
- Vergleichen (s440) des gemessenen Sauerstoffgehalts (Oxmeas) mit dem modellierten Sauerstoffgehalt (Oxmeas) und Verwenden als Basis für ein Kriterium zum Entscheiden, ob die Messposition der geplanten Messkonfiguration entspricht.

6. Verfahren nach einem der vorangegangenen Ansprüche, wobei sich der NOₓ Sensor (255) stromabwärts des SCR-Katalysators (260) befindet.

7. Verfahren nach einem der vorangegangenen Ansprüche, wobei der NOₓ Sensor (245; 255) für Messungen bestimmt ist, welche als eine Basis zum Überwachen der Erfüllung von vorgeschriebenen Umwelterfordernissen dienen.

8. SCR-System, wobei ein Reduktionsmittel einem Abgasfluss stromaufwärts einem SCR-Katalysator (260) zugeführt wird, umfassend Mittel (200; 210; 500) zum Entscheiden, ob sich ein NOₓ Sensor (245; 255) in dem Abgaskanal (241; 251) eines Motor (240) zur NOₓ Messung entsprechend einer geplanten Messkonfiguration befindet,
**gekennzeichnet durch**
- Mittel (200; 210; 500) zum Verwenden des NOₓ Sensors (245; 255) zum Messen eines Sauerstoffgehalts (Oxmeas) an der NOₓ Sensormessposition, und
- Mittel (200; 210; 500) zum Entscheiden, basierend auf dem gemessenen Sauerstoffgehalt (Oxmeas), ob die Messposition der geplanten Messkonfiguration entspricht.

9. SCR-System nach Anspruch 8, ferner umfassend Mittel (200; 210; 500) zum Verwenden einer detektierten Veränderung, welche eine bestimmte Größe an gemessenem Sauerstoffgehalt beim Start des Motors (240) überschreitet, als ein Kriterium, dass die Messposition der geplanten Messkonfiguration entspricht.

10. SCR-System nach Anspruch 8, ferner umfassend Mittel (200; 210; 500) zum Verwenden einer detektierten Veränderung an gemessenem Sauerstoffgehalt (Oxmeas), welcher eine vorbestimmte Größe über ein vorbestimmtes Zeitintervall (t2-t3) überschreitet, als ein Kriterium dafür, dass die Messposition der geplanten Messkonfiguration entspricht.

11. SCR-System nach Anspruch 10, wobei die vorbestimmte Größe 2 Prozent ist.

12. SCR-System nach Anspruch 8, umfassend
- Mittel (200; 210; 500) zum kontinuierlichen Bestimmen eines modellierten Sauerstoffgehalts des Abgases,
- Mittel (200; 210; 500) zum Vergleichen des gemessenen Sauerstoffgehalts (Oxmeas) mit dem modellierten Sauerstoffgehalt (Oxmod) und Verwenden dieses Vergleichs als eine Basis für ein Kriterium zum Entscheiden ob die Messposition der geplanten Messkonfiguration entspricht.

13. SRC-System nach einem der Ansprüche 8 bis 12, wobei sich der NOₓ Sensor (255) stromabwärts des SCR-Katalysators (260) befindet.

14. SCR-System nach einem der Ansprüche 8 bis 13, wobei der NOₓ Sensor (245; 255) für Messungen bestimmt ist, welche als eine Basis zum Überwachen der Erfüllung von vorgeschriebenen Umwelterfordernissen dienen.

15. Kraftfahrzeug (100; 110) mit einem SCR-System nach einem der Ansprüche 8 bis 14.

16. Kraftfahrzeug (100; 110) nach Anspruch 15, wobei das Kraftfahrzeug ein Lastwagen, Bus oder Auto ist.

17. Computerprogramm (P), in einem SCR-System, wobei ein Reduktionsmittel einem Abgasfluss stromaufwärts eines SCR-Katalysator (260) zugeführt wird, zum Entscheiden, ob sich ein NOₓ Sensor (245; 255) in dem Abgaskanal (241; 251) eines Motors (240) zur NOₓ Messung entsprechend einer geplanten Messkonfiguration befindet, wobei das Computerprogramm Programmcode umfasst, der ausgebildet ist, eine elektronische Steuereinheit (200; 500) oder einen anderen Computer (210; 500), der mit der elektronischen Steuereinheit (200; 500) verbunden ist, dazu zu veranlassen, Schritte nach einem der Ansprüche 1 bis 7 auszuführen.

18. Computerprogrammprodukt umfassend ein Programmcode, der auf einem Computer lesbaren Medium gespeichert ist und ausgebildet ist Verfahrensschritte von einem der Ansprüche 1 bis 7 auszuführen, wenn das Programm auf einer elektronischen Steuereinheit (200; 500) oder einem anderen Computer (210; 500), der mit der elektronischen Steuereinheit (200; 500) verbunden ist, läuft.

## Revendications

1. Procédé, dans un système de réduction catalytique sélective dans lequel un agent réducteur est amené dans un flux d'échappement en amont d'un catalyseur de réduction catalytique sélective (260), pour décider si un capteur de NOₓ (245 ; 255) est ou non situé dans le conduit d'échappement (241 ; 251) d'un moteur (240) pour une mesure de NOₓ selon une configuration de mesure prévue, **caractérisé par** les étapes consistant à :
- utiliser (s410) ledit capteur de NOₓ (245 ; 255) pour mesurer une teneur en oxygène (Oxmeas) dans la position de mesure du capteur de NOₓ, et
- décider, en fonction de la teneur en oxygène mesurée (Oxmeas), si ladite position de mesure correspond ou non à la configuration de mesure prévue.

2. Procédé selon la revendication 1, dans lequel une variation détectée qui dépasse une ampleur prédéterminée de la teneur en oxygène mesurée au démarrage dudit moteur (240) est prise comme critère selon lequel ladite position de mesure correspond à la configuration de mesure prévue.

3. Procédé selon la revendication 1, dans lequel une variation détectée de la teneur en oxygène mesurée (Oxmeas) qui dépasse une ampleur prédéterminée au cours d'une période de temps prédéterminée (t2-t3) est prise comme critère selon lequel ladite position de mesure correspond à la configuration de mesure prévue.

4. Procédé selon la revendication 3, dans lequel ladite ampleur prédéterminée est de 2 pour cent.

5. Procédé selon la revendication 1, comprenant les étapes consistant à :
- déterminer de façon continue une teneur en oxygène modélisée des gaz d'échappement, et
- comparer (s440) la teneur en oxygène mesurée (Oxmeas) à la teneur en oxygène modélisée (Oxmod), et utiliser cette comparaison comme base d'un critère pour décider si ladite position de mesure correspond ou non à la configuration de mesure prévue.

6. Procédé selon l'une quelconque des revendications précédentes, dans lequel ledit capteur de NOₓ (255) est situé en aval du catalyseur de réduction catalytique sélective (260).

7. Procédé selon l'une quelconque des revendications précédentes, dans lequel ledit capteur de NOₓ (245 ; 255) est prévu pour des mesures qui servent de base pour estimer la satisfaction à des exigences environnementales prescrites.

8. Système de réduction catalytique sélective dans lequel un agent réducteur est amené dans un flux d'échappement en amont d'un catalyseur de réduction catalytique sélective (260), comprenant des moyens (200 ; 210 ; 500) pour décider si un capteur de NOₓ (245 ; 255) est ou non situé dans le conduit d'échappement (241 ; 251) d'un moteur (240) pour une mesure de NOₓ selon une configuration de mesure prévue, **caractérisé par** :
- des moyens (200 ; 210 ; 500) d'utilisation dudit capteur de NOₓ (245 ; 255) pour mesurer une teneur en oxygène (Oxmeas) dans la position de mesure du capteur de NOₓ, et
- des moyens (200 ; 210 ; 500) pour décider, en fonction de la teneur en oxygène mesurée (Oxmeas), si ladite position de mesure correspond ou non à la configuration de mesure prévue.

9. Système de réduction catalytique sélective selon la revendication 8, comprenant de plus des moyens (200 ; 210 ; 500) permettant de prendre une variation détectée qui dépasse une ampleur prédéterminée de la teneur en oxygène mesurée au démarrage dudit moteur (240) comme critère selon lequel ladite position de mesure correspond ou non à la configuration de mesure prévue.

10. Système de réduction catalytique sélective selon la revendication 8, comprenant de plus des moyens (200 ; 210 ; 500) permettant de prendre une variation détectée de la teneur en oxygène mesurée (Oxmeas) qui dépasse une ampleur prédéterminée au cours d'une période de temps prédéterminée (t2 - t3) comme critère selon lequel ladite position de mesure correspond ou non à la configuration de mesure prévue.

11. Système de réduction catalytique sélective selon la revendication 10, dans lequel ladite ampleur prédéterminée est de 2 pour cent.

12. Système de réduction catalytique sélective selon la revendication 8, comprenant :
- des moyens (200 ; 210 ; 500) pour déterminer de façon continue une teneur en oxygène modélisée des gaz d'échappement, et
- des moyens (200 ; 210 ; 500) pour comparer la teneur en oxygène mesurée (Oxmeas) à la teneur en oxygène modélisée (Oxmod) et utiliser cette comparaison comme base d'un critère permettant de décider si ladite position de mesure correspond ou non à la configuration de mesure prévue.

13. Système de réduction catalytique sélective selon l'une quelconque des revendications 8 à 12, dans lequel ledit capteur de NOₓ (255) est situé en aval du catalyseur de réduction catalytique sélective (260).

14. Système de réduction catalytique sélective selon l'une quelconque des revendications 8 à 13, dans lequel ledit capteur de NOₓ (245 ; 255) est prévu pour des mesures qui servent de base pour estimer la satisfaction à des exigences environnementales prescrites.

15. Véhicule à moteur (100 ; 110) équipé d'un système de réduction catalytique sélective selon l'une quelconque des revendications 8 à 14.

16. Véhicule à moteur (100 ; 110) selon la revendication 15, ce véhicule étant l'un quelconque parmi un camion, un autocar ou une voiture.

17. Programme informatique (P), dans un système de réduction catalytique sélective dans lequel un agent réducteur est amené dans un flux d'échappement en amont d'un catalyseur de réduction catalytique sélective (260), permettant de décider si un capteur de NOₓ (245 ; 255) est ou non situé dans le conduit d'échappement (241 ; 251) d'un moteur (240) pour une mesure de NOₓ selon une configuration de mesure prévue, ce programme informatique comprenant un code de programme adapté pour qu'une unité de commande électronique (200 ; 500) ou un autre ordinateur (210 ; 500) connecté à l'unité de commande électronique (200 ; 500) exécute les étapes selon l'une quelconque des revendications 1 à 7.

18. Produit de programme informatique, comprenant un code de programme mémorisé sur un support lisible par ordinateur, adapté de façon à exécuter des étapes de procédé selon l'une quelconque des revendications 1 à 7 lorsque ledit programme est exécuté sur une unité de commande électronique (200 ; 500) ou un autre ordinateur (210 ; 500) connecté à l'unité de commande électronique (200 ; 500).
